## Europäisches Patentamt

(19) **European Patent Office**

**Office européen des brevets**

(11) Veröffentlichungsnummer: **0 309 973**
**B1**

(12)

# EUROPÄISCHE PATENTSCHRIFT

(45) Veröffentlichungstag der Patentschrift:
23.05.90

(51) Int. Cl.⁵: **C21D 1/09**

(21) Anmeldenummer: **88115849.7**

(22) Anmeldetag: **27.09.88**

(54) Verfahren zum thermischen Bearbeiten von Bauteilen in festem Zustand mit einem Laserstrahl.

(30) Priorität: **01.10.87 DE 3733147**

(43) Veröffentlichungstag der Anmeldung:
**05.04.89 Patentblatt 89/14**

(45) Bekanntmachung des Hinweises auf die Patenterteilung:
**23.05.90 Patentblatt 90/21**

(84) Benannte Vertragsstaaten:
**DE ES FR GB IT NL SE**

(56) Entgegenhaltungen:
**DD-A- 237 271**
**DE-A- 2 200 696**
**DE-A- 3 731 136**

(73) Patentinhaber: **MESSER GRIESHEIM GMBH, Hanauer
Landstrasse 330, D-6000 Frankfurt/Main(DE)**
Patentinhaber: **HEINZ KLEIBER MESS- UND
REGELGERÄTE, Donaustrasse 4, D-8520 Erlangen(DE)**

(72) Erfinder: **Bergmann, Hans Wilhelm, Prof.Dr.,
Irisstrassse 9, D-8501 Eckental Brand(DE)**
Erfinder: **Kleiber, Heinz, Am Gründel 8,
D-8252 Hetssdorf/Untermembach(DE)**
Erfinder: **Bakowsky, Lothar, Dr., Drosselweg 5,
D-8038 Gröbenzell(DE)**
Erfinder: **Kappelsberger, Erwin, Gelbhofstrasse 3,
D-8000 München 70(DE)**

(74) Vertreter: **Roesner, Werner, MESSER GRIESHEIM GmbH
Patentabteilung Lärchenstrasse 137 Postfach 83 00 48,
D-6230 Frankfurt 83(DE)**

## Beschreibung

Die Erfindung betrifft ein Verfahren zum thermischen Bearbeiten von Bauteilen in festem Zustand nach dem Oberbegriff des Anspruchs 1.

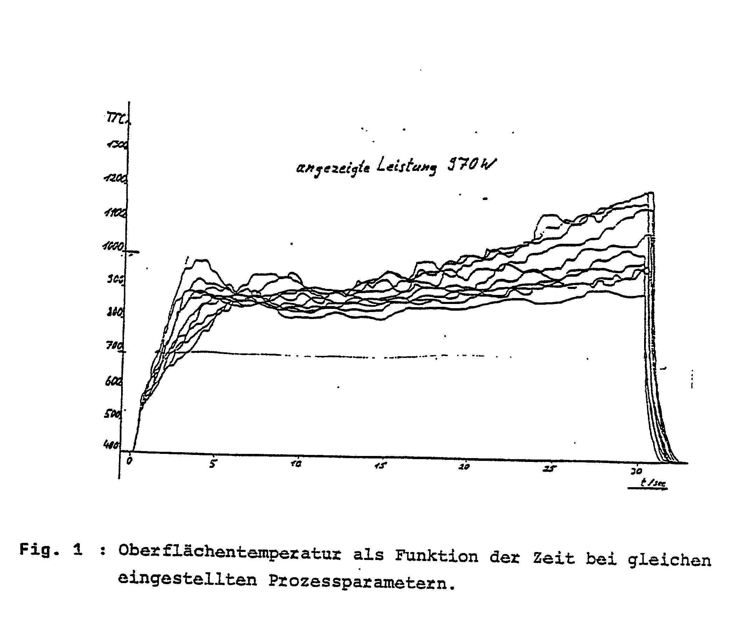

Stähle und Gußeisenwerkstoffe lassen sich vorteilhaft mit Hilfe eines $CO_2$-Hochleistungslasers an der Oberfläche von Bauteilen härten. Dabei wird durch die intensive Strahlung des $CO_2$-Laserlichts in die Oberfläche des Bauteils Energie eingebracht, die zu einem Temperaturprofil in die Tiefe des Bauteils hinein führt. Überschreitet die Temperatur in einem bestimmten Bereich des Bauteils eine von der Aufheizgeschwindigkeit abhängige Temperatur, so wandelt sich das kubisch raumzentrierte $\gamma$-Eisen, der Ferrit, in das kfz$\gamma$-Eisen (Austenit) um. Wegen der höheren Kohlenstofflöslichkeit des $\gamma$-Eisens im Vergleich zum $\gamma$-Eisen, kann der bei Raumtemperatur ebenfalls vorleigende Zementit ($Fe_3C$) sich auflösen und es kommt zu einer Gleichverteilung des Kohlenstoffs im Austenit bei hinreichend hohen Temperaturen oder ausreichend langen Haltezeiten. Die hier beschriebenen Vorgänge sind diffusionsgesteuert und damit von der Temperatur und der Zeit abhängig. Das Austenitisierungsverhalten wird für die verschiedenen Werkstoffzusammensetzungen in sogenannten Zeit-Temperatur-Austenitisierungsschaubildern zusammengefaßt. Diese Austenitisierungsschaubilder gelten für konstante Aufheizgeschwindigkeiten und für spezielle Normproben. Bei nicht konstanten Aufheizgeschwindigkeiten und komplexen Bauteilgeometrien müssen derartige Diagramme durch umfangreiche empirische Studien ermittelt werden. Dies ist besonders bei großen und/oder teuren Bauteilen kritisch. Nach der Austenitisierung kommt es beim Abkühlen durch Selbstabschreckung des Bauteils, solange eine ausreichend große Abschreckgeschwindigkeit erreicht werden kann, zur Bildung des Martensit. Damit die nach dem Abschrecken erreichte Härte homogen ist, ist es erforderlich, daß das Bauteil vorher im Bereich des homogenen Austenits gewesen ist, andernfalls werden beachtliche Streuungen in den Härtewerten beobachtet. Bei hohen Aufheizgeschwindigkeiten, wie sie beim Laserhärten typisch sind ($10^3$-$10^5$K/s), ist es möglich, daß der Werkstoff vor Erreichen des homogenen austenitischen Zustandes aufschmilzt. Die nachfolgende Selbstabschreckung führt dann zur Wiedererstarrung in Form einer Stengelkristallisation. Dieses Gefüge ist wegen seiner schlechten mechanischen Eigenschaften unerwünscht. Außerdem kann es speziell an Bauteilkanten zu einer Veränderung der Geometrie des Bauteils kommen. Da die meisten technischen Werkstoffe eine inhomogene Verteilung der Legierungselemente aufweisen, besteht die Möglichkeit, daß auch vor Erreichen der Gleichgewichtsschmelztemperaturen lokale Anschmelzungen auftreten. Viele Werkstoffe galten deshalb als ungeeignet für das Laserhärten. Bisher ermittelt man beim Laserhärten die Einhärtetiefe als Funktion der Parameter, Leistungsdichte und Vorschubgeschwindigkeit für eine vorgegebene Geometrie des belichteten Flecks und erhält dann Diagramme, bei denen die Einhärtetiefe mit fallender Vorschubgeschwindigkeit und steigender Leistungsdichte zunimmt. Der technisch verwendbare Bereich wird dabei durch das Einsetzen von Anschmelzungen begrenzt. Für gleiche Vorschubgeschwindigkeit und gleiche Leistungsdichte erhält man für den selben Werkstoff Schwankungen in der Oberflächentemperatur, wie sie in Fig. 1 dargestellt sind. Hieraus resultieren dann Schwankungen in der Härte nach dem Abschrecken. Um einerseits ein Aufschmelzen zu vermeiden, andererseits eine Härtung sicherzustellen, müssen umfangreiche Vorkehrungen beim praktischen Laserhärten von Bauteilen getroffen werden.

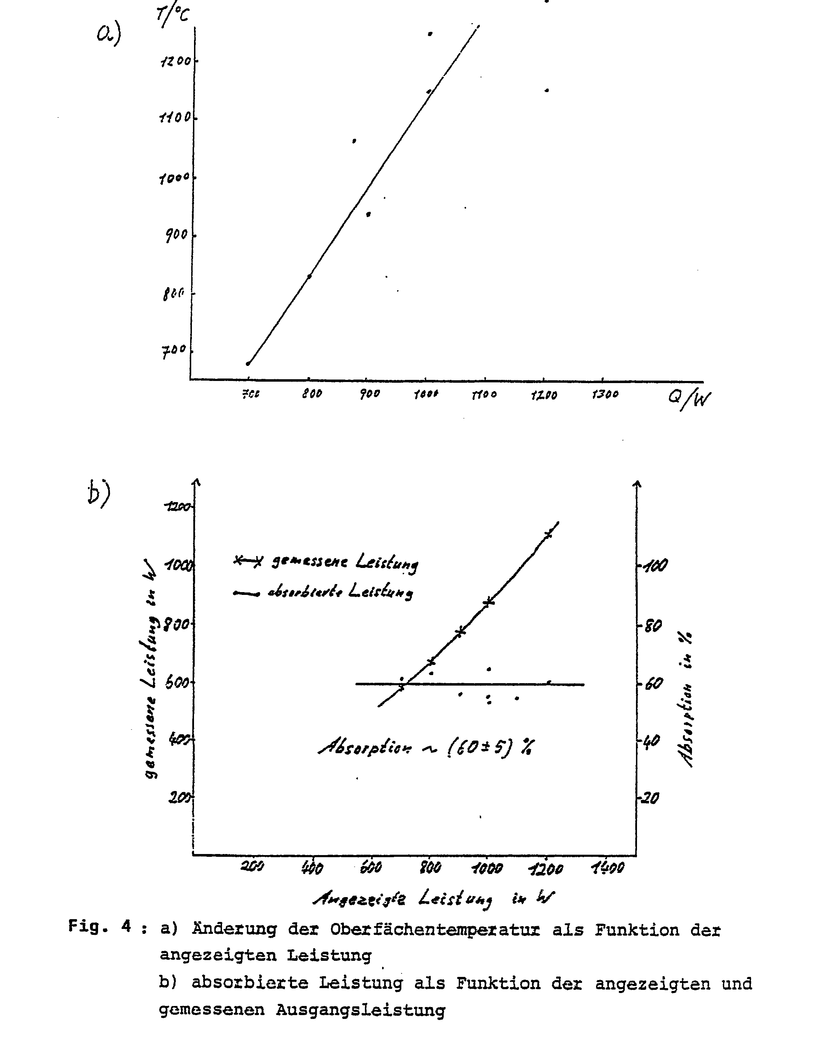

Bei herkömmlichen Verfahren ist eine genau einzuhaltende Oberflächenbeschaffenheit erforderlich. Außerdem wird zur Verbesserung des Wirkungsgrades oftmals eine das Laserlicht gut absorbierende Schicht auf die Oberfläche gebracht. Den oben beschriebenen Arbeitsgängen ist besondere Sorgfalt zu widmen, da bereits Schwankungen in der absorbierten Leistung von nur 100 W (d. h. 10 % der Leistung eines 1kW-Lasers, bzw. 2 % der Leistung eines 5 kW-Lasers) zu Änderungen der Oberflächentemperatur von ca. 200° C führen können, vgl. Fig. 4. Weiterhin treten bei technischen Laseranlagen kurzzeitige aber auch langzeitige Schwankungen der Ausgangsleistung auf, so daß üblicherweise mit großem Aufwand versucht wird, die Ausgangsleistung extrem stabil zu halten, weil in erster Näherung absorbierte Leistung und Oberflächentemperatur proportional sind.

Härtet man ein Bauteil mit dem Laser, so erwärmt sich im Laufe des Prozesses das gesamte Werkstück. Da aber die Absorption des $CO_2$-Laserlichtes mit steigender Temperatur zunimmt, steigt im Laufe des Prozesses die Oberflächentemperatur zwangsläufig an, außerdem steigt die Einhärtetiefe, das ist die Tiefe, bis zu der eine martensitische, das ist die Tiefe, bis zu der eine martensitische Umwandlung erreicht werden kann. Erst nach längerer Behandlungszeit werden quasi stationäre Bedingungen erreicht.

Neben diesen in der Praxis angewandten Verfahren sind bereits in einigen Druckschriften Verfahren und/oder Vorrichtungen beschrieben, die sich mit einer Änderung von Laserparametern in Abhängigkeit von der erfaßten Oberflächentemperatur befassen.

Beispielsweise soll in der DE 2 200 696 A1 beim Schweißen, Löten, Schneiden oder Perforieren die Leistung des Lasers in Abhängigkeit von der abgegebenen Hohlraumstrahlung des Werkstückes gesteuert werden. Hierbei wird nach dem Erreichen einer vorgegebenen Intensität der Hohlraumstrahlung der Laser abgeschaltet oder der Laserstrahl mittels einer Abdeckung unterbrochen. Dabei pendelt die Oberflächentemperatur des Werkstückes unkontrolliert um den vorgegebenen Intensitätswert der Hohlraumstrahlung, so daß keine reproduzierbare Werkstücktemperatur bei kontinuierlicher Laserbearbeitung eingestellt werden kann.

Gemäß der DD 23 72 71 A1 soll die Meßgenauigkeit durch die Erfassung eines möglichst großen Raumwinkelbereichs der emittierten Wärmestrahlung erhöht werden.

Die ältere, jedoch nach dem Prioritätszeitpunkt veröffentlichte DE 37 31 136 A1 offenbart dahingegen eine Steuervorrichtung zur Härtung mittels Energiestrahlung, bei der in Abhängigkeit von den erfaßten Temperaturverteilungsdaten eine Oberflächen-Temperaturhysterese berechnet und der Laser gesteuert wird.

Der Erfindung liegt die Aufgabe zugrunde, die Temperatur eines Bauteiles in einem vorgegebenen Temperaturintervall von ± 100 K oder kleiner, vorzugsweise ± 7 K oder kleiner, über einen vorgegebenen Bauteilbereich konstant zu halten.

Diese Aufgabe wird bei einem gattungsgemäßen Verfahren durch die Merkmale des Anspruches 1 gelöst.

Eine Vorrichtung zur Durchführung des erfindungsgemäßen Verfahrens ist in Anspruch 15 gekennzeichnet.

Vorteilhafte Weiterbildungen der Erfindung sind in den Unteransprüchen angegeben.

Die mit der Erfindung erzielten Vorteile beruhen darauf, daß bei einer on-line Regelung der Leistung in dem erfindungsgemäßen Zeitraum, die Temperatur des Oberflächenbereiches innerhalb eines Temperaturintervalles von ± 100 K oder kleiner, vorzugsweise ± 7 K oder kleiner, konstant gehalten werden kann. Dabei wird das Temperaturintervall durch die Vorgabe einer bestimmten Temperatur, die innerhalb des erfindungsgemäßen Zeitraumes von schneller als 1 Millisekunde on-line geregelt wird, erzeugt. Während der on-line Regelung wird das Bauteil kontinuierlich thermisch bearbeitet. Durch dieses Verfahren können vorteilhaft reproduzierbare Arbeitsergebnisse beim Laserwärmebehandeln, wie Laserhärten, Laserweichglühen, Laserrekristallisieren erreicht werden. Überraschenderweise hat sich bei der erfindungsgemäßen on-line Leistungsregelung in einem Zeitraum zwischen 1 Millisekunde und 1 Mikrosekunde bei dem Temperaturintervall von ± 100 K oder kleiner, vorzugsweise ± 7 K oder kleiner, eine nahezu konstante Einhärtetiefe eingestellt. Dabei wird der von der Differenz des Temperaturintervalls und der Aufheizgeschwindigkeit abhängige Regelzeitraum durch die Laserfunktionsfähigkeit bei einer Mikrosekunde begrenzt. Vorteilhaft wird daher nach einem weiteren Ausführungsbeispiel der Erfindung, die Wärmestrahlung während einer Mikrosekunde mehrmals erfaßt und über die Zeit gemittelt. Die on-line Leistungsregelung wird dann mit dem Mittelwert der erfaßten Temperaturwerte vorgenommen. Bei dem erfindungsgemäßen Verfahren wird die relative Vorschubgeschwindigkeit zwischen dem zu bearbeitenden Bauteil und dem Laserstrahl und/oder die Leistungsdichte des Laserstrahls so eingestellt, daß mit einer kleineren als der maximalen Laserleistung, vorzugsweise mit 70 Prozent der maximalen Laserleistung die vorgegebene Temperatur der Oberfläche im zeitlichen Mittel erreicht wird. Hierdurch kann eine on-line Regelung, d. h. eine Veränderung der Laserleistung zu einem höheren oder nidrigeren Wert erfolgen.

Zum Laserwärmebehandeln kann vorteilhaft ein $CO_2$-Laser oder ein Festkörperlaser verwendet werden. Während bei der thermischen Bearbeitung mit einem $CO_2$-Laser mit dem Strahlungspyrometer, vorzugsweise einem Quotientenpyrometer, die Wärmestrahlung mit einer Wellenlänge in einem Bereich zwischen 0,9 bis 1,2 Mikrometer, vorzugsweise 1,06 Mikrometer, erfaßt wird, wird bei der Verwendung eines Nd: YAG-Laser, eine Wellenlänge in einem Bereich zwischen 9 bis 15 Mikrometer, vorzugsweise 10, 6 Mikrometer erfaßt. Durch die große Differenz zwischen den bei der Laserwärmebehandlung reflektierten Wellenlängen ($CO_2$-Laser 10, 6 Mikrometer und Festkörperlaser 1,06 Mikrometer) und den von dem Strahlungspyrometer erfaßten Wellenlängen ist eine hohe, von den Laserstrahlen unbeeinflußten Empfindlichkeit der online Regelung sichergestellt.

Gemäß einer vorteilhaften Ausgestaltung der Erfindung wird mit Hilfe eines Schmalbandfilters nur die Wellenlänge des $CO_2$-Laserlichts von 10.6 μm mit einem zweiten Pyrometer gemessen und aus der gemessenen Intensität dieser reflektierten Strahlung der Emissionsfaktor bestimmt. Bei Kenntnis des Emissionsfaktors für 10,6μm Wellenlänge wird der Emissionsfaktor für 1,06 μm Wellenlänge in einem Rechner berechnet. Mit Hilfe des berechneten Emissionsfaktors kann eine absolute Temperaturmessung vorgenommen werden.

Bei der Laserwärmebehandlung mit Hilfe des Festkörperlasers wird zur Bestimmung des Emissionsfaktors die Wärmestrahlung bei einer Wellenlänge von 10,6 μm und die reflektierte Strahlung des Laserlichtes bei einer Wellenlänge von 1,06 μm gemessen wird.

Ein Ausführungsbeispiel der Erfindung ist in der Zeichnung dargestellt und wird im folgenden näher beschrieben.

Es zeigen

Fig. 1 ein Diagramm der Oberflächentemperatur als Funktion der Zeit bei gleichen eingestellten Prozessparametern

Fig. 2 eine schematische Darstellung der Vorrichtung Fig. 3
a) ein Beispiel für einen Temperaturverlauf als Funktion der Zeit bei on-line Prozesskontrolle und Leistungsregelung
b) ein zugehöriger Verlauf der Laserleistung Fig. 4
a) eine Änderung der Oberflächentemperatur als Funktion der angezeigten Leistung
b) eine absorbierte Leistung als Funktion der angezeigten und gemessenen Ausgangsleistung

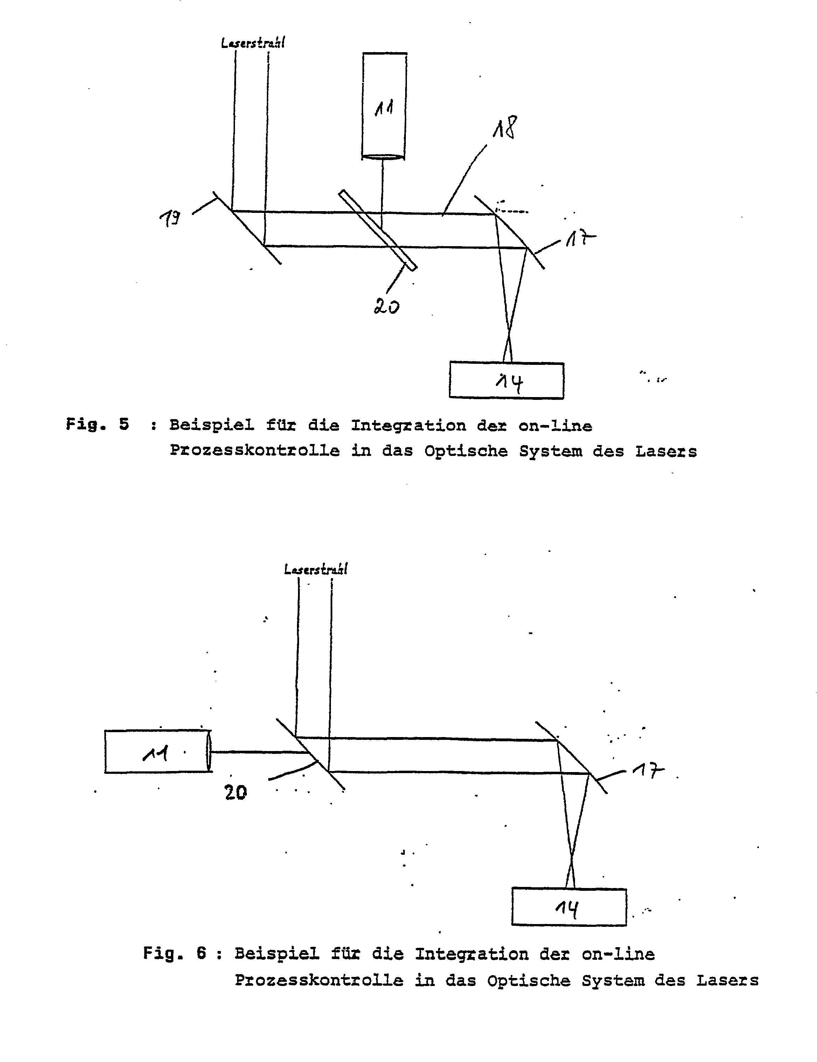

Fig. 5 ein Beispiel für die Integration der on-line Prozesskontrolle in das Optische System des Lasers

Fig. 6 ein weiteres Beispiel für die Integration der on-line Prozesskontrolle in das Optische System des Lasers

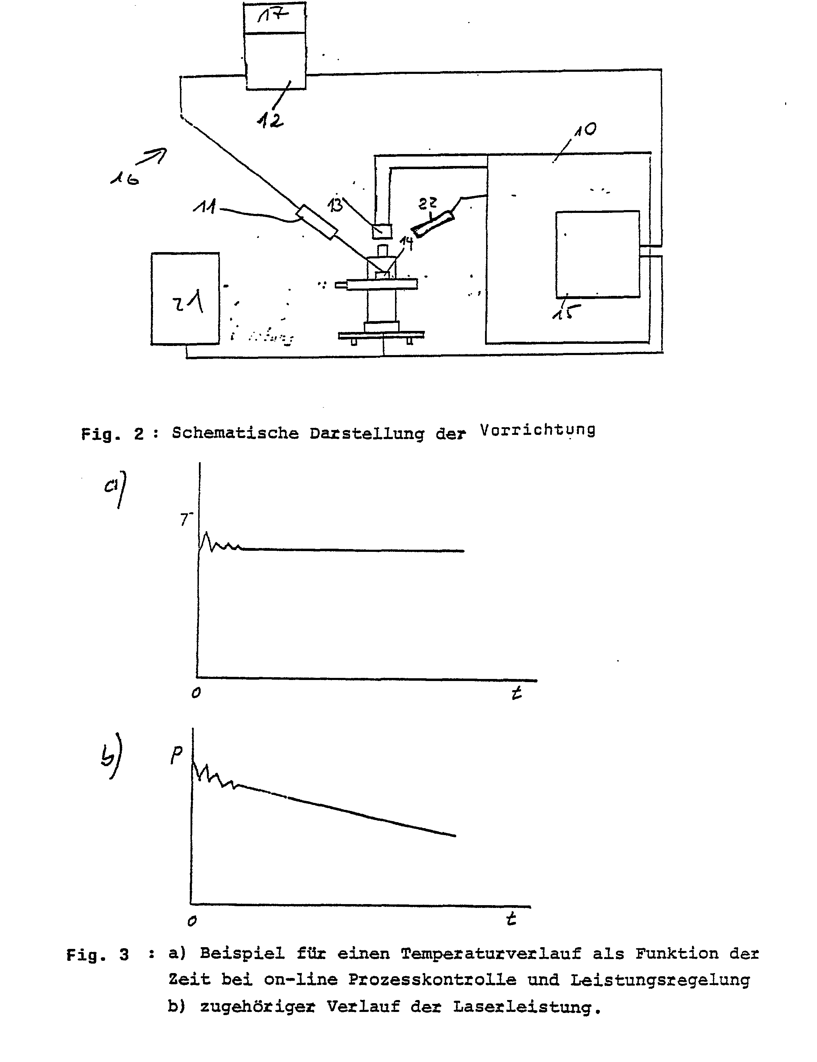

Eine Vorrichtung zur on-line Prozesskontrolle und on-line Leistungsregelung mittels der eine Härtung von Stählen und Gußeisenwerkstoffen durchgeführt werden kann, ist in Fig. 2 dargestellt. Hierbei ist der außerhalb des Lasers 10 angeordnete Strahlungspyrometer mit 11 und der Regler, vorzugsweise ein PID- oder PD-Regler, mit 12 bezeichnet. Der Strahlungspyrometer 11 kann nach einem vorteilhaften Ausführungsbeispiel mit dem Bearbeitungskopf 13 des Lasers 10 oder ortsfest auf einer separaten Vorrichtung angeordnet und auf die Bearbeitungsstelle des Bauteiles 14 gerichtet werden. Der Bearbeitungskopf enthält die nicht näher dargestellten Fokussieroptiken und das Gasführungssystem. Das Bauteil 14 ist auf einer in 3 Achsen verfahrbaren Auflagevorrichtung angeordnet, die von einer Steuerung 21 kontrolliert wird. Selbstverständlich ist es auch möglich, das Bauteil 14 ortsfest anzuordnen und den Laserstrahl relativ zu dem Bauteil 14 zu bewegen. Über den mit dem Meßkreis 16 verbundenen Strahlungspyrometer 11 werden Veränderungen in der Oberflächentemperatur erfaßt, welche mit einem am Sollwertgeber 17 eingestellten Sollwert verglichen werden. Die so ermittelten Abweichungen in der Oberflächentemperatur werden in den Regler eingespeist, der in Abhängigkeit davon Stellsignale an eine die Leistung des Lasers regelndes Stellglied abgibt. Hierzu ist der Regler 12 mit dem Leistungsteil 15, insbesondere mit der Stromversorgung der Leistungssteuerung des Lasers 10 verbunden. Vorzugsweise erfolgt die Erfassung und die Regelung, sowie die Relativbewegung zwischen Laserstrahl und Bauteil gemeinsam durch eine CNC-Steuerung.

Nach einer besonders vorteilhaften Anordnung ist die Erfassung der Wärmestrahlung optisch in dem Strahlengang 18 des Lasers 10 integriert. Hierbei wird die Wärmestrahlung über den Fokussierspiegel 17 auf mindestens einen im Strahlengang 18 der Laserstrahlen angeordneten Umlenkspiegel 19 gelenkt, der für die Wellenlänge bzw. den Wellenlängenbereich der Wärmestrahlung durchlässig ist und die Wellenlänge bzw. den Wellenlängenbereich des Lasers 10 reflektiert. Außerhalb des Strahlenganges des Laserstrahles ist im Strahlengang der durch diesen Umlenkspiegel tretenden Wärmestrahlen der Strahlungspyrometer 11 angeordnet. Durch diese Anordnung wird vorteilhaft eine Bewegung des Strahlungspyrometers bei Laseranlagen mit bewegbaren Optiken vermieden (Fig. 6).

Selbstverständlich ist es auch möglich, im Strahlengang des Lasers einen zusätzlichen Spiegel 20 anzuordnen, über den die Wärmestrahlung auf den Strahlungspyrometer 11 reflektiert wird (Fig. 5).

Nach einer vorteilhaften Weiterbildung der Erfindung wird mit Hilfe eines Schmalbandfilters nur die Wellenlänge des $CO_2$-Laserlichts von 10.6 μm mit einem zweiten Pyrometer 22 (Fig.2) gemessen und aus der gemessenen Intensität dieser reflektierten Strahlung der Emissionsfaktor bestimmt. Bei Kenntnis des Emissionsfaktors für 10, 6 μm Wellenlänge der Emissionsfaktor für 1,06 μm Wellenlänge in einem Rechner berechnet wird und mit Hilfe des Emissionsfaktors durch die Messung der 1,06 μm Wellenlänge eine absolute Temperaturmessung vorgenommen wird.

Erfindungsgemäß kann nunmehr mit Hilfe einer on-line Prozeßkontrolle und on-line Leistungsregelung vorteilhaft eine Härtung von Stählen und Gußeisenwerkstoffen durchgeführt werden, indem zunächst mit Hilfe des Strahlungspyrometers 11, das nur das Licht einer speziellen Wellenlänge, beispielsweise bei einem $CO_2$- Laser 1,06 μm und bei einem Festkörperlaser (Nd: YAG) 10,6 μm mißt, die Temperatur ermittelt wird und dann mit Hilfe eines Reglers die Leistung des Lasers in einem Zeitraum schneller als 1 Millisekunde gesteuert wird, so daß die Temperatur an der Oberfläche des Bauteils in einem konstanten Temperaturintervall gehalten wird. Vorteilhaft ist die Wellenlänge der Wärmestrahlung um nahezu einen Faktor 10 unterschiedlich zur jeweiligen Wellenlänge der Laserstrahlung.

Bei der praktischen Durchführung des Härtens wählt man eine Einhärtetiefe, von der ein Bearbeitungsfeld abhängt, das begrenzt wird durch zwei extreme Temperaturkurven. Die obere ist dadurch gekennzeichnet, daß sie die höchste erlaubte Temperatur darstellt, z. B. um sicherzustellen, daß das Bauteil nicht aufschmilzt, die untere dadurch, daß sichergestellt werden muß, daß man in den Bereich des homogenen Austenits gelangt. Wählt man nun eine geeignete, konstante Leistungsdichte und hat man einen konstanten Absorptionkoeffizienten, so liegen damit die Oberflächentemperatur und die Vorschubgeschwindigkeit fest, die zu der gewünschten Einhärtetiefe führen. Die Problematik liegt bei der Konstanz des Absorptionskoeffizienten. Beim Laserhärten können hier Abweichungen vom mittleren Absorptionskoeffizienten im Bereich von ± 10 % auftreten. Dies führt für eine fest eingestellte Vorschubgeschwindigkeit zu drastischen Schwankungen bei der Einhärtetiefe zwischen zwei Grenzwerten. Um zu einer hohen Prozeßsicherheit zu kommen, wird beim Laserhärten ein Punkt der Oberflächentemperatur on-line mit dem Pyrometer gemessen. Mit Hilfe eines Reglers ist es dann möglich, on-line den Strahlstrom bei konstanter Hochspannung so zu verändern, daß durch Modulation der Ausgangsleistung am Bauteil stets ein Konstantes Temperaturintervall, beispielsweise ± 7° K, vorliegt. Man befindet sich damit auf einer Kurve konstanter Oberflächentemperatur. Bei fester Vorschubgeschwindigkeit liegt dann die Einhärtetiefe fest. Anders ausgedrückt, statt mit einer konstanten Ausgangsleistung arbeitet man bei einer konstanten absorbierten Leistung. Durch die pyrometrische Messung der Oberflächentemperatur und Regelung der Ausgangsleistung wird eine konstante Oberflächentemperatur bei einer Schwankung der Ausgangsleistung erzwungen, wodurch die Absorptionsschwankungen ausgeglichen werden. Ein allmähliches Absinken der Ausgangsleistung zu Beginn des Prozesses kompensiert die instationäre Anfangssituation. Voraussetzung für eine derartige on-line Prozeßkontrolle ist eine ausreichend große Leistungsreserve. Unterhalb einer mittleren Leistung von 80 % der Maximalleistung, kann eine konstante Oberflächentemperatur gewährleistet werden. Ist die mittlere Ausgangsleistung höher, treten zwangsläufig wieder Schwankungen der Oberflächentemperatur auf. Mit dem Stahl C45 wurden bei drei verschiedenen Oberflächentemperaturen Härteversuche mit einem 4kW $CO_2$-Laser bei Vorschubgeschwindigkeiten zwischen 0,025 und 3,2 m/min durchgeführt. Unter Verwendung konstanter Leistungsverteilung über den Querschnitt eines rechteckförmigen Strahls ergab sich ein systematischer Verlauf der Einhärtetiefe mit der Vorschubgeschwindigkeit. Dabei konnten nahezu keine Abweichungen der ermittelten Einhärtetiefe vom idealen Verlauf festgestellt werden.

Fig. 3a zeigt den Verlauf der Temperatur als Funktion der Zeit, 3b die Leistung als Funktion der Zeit. Dabei wird die Temperaturmessung und Leistungssteuerung so schnell vorgenommen, daß die Werkstoffoberfläche in einem konstanten Temperaturintervall bleibt. Für Aufheiz- und Abschreckgeschwindigkeiten zwischen $10^3$ und $10^5$ K/s werden hierzu vorzugsweise Regelgeschwindigkeiten von $10 - 300 \times 10^{-6}$ s erfindungsgemäß eingesetzt.

**Patentansprüche**

1. Verfahren zum thermischen Bearbeiten oder Wärmebehandeln eines Bauteiles in festem Zustand mit einem Laserstrahl, wobei mit Hilfe mindestens eines Strahlungsdetektors welcher isoliert nur die Wärmestrahlung einer bestimmten Wellenlänge bzw. eines bestimmten Wellenlängenbereiches erfaßt, die Oberflächentemperatur entlang eines Bearbeitungsbereiches des Bauteiles ermittelt und innerhalb von maximal ± 100 K um die Solltemperatur konstant gehalten wird durch on-line Regelung der Laserleistung in einem Zeitraum schneller als eine Millisekunde.

2. Verfahren nach Anspruch 1, dadurch gekennzeichnet, daß beim Laserhärten, Laserrekristallisieren oder Laserweichglühen die Laserleistung in einem Zeitraum zwischen 10 Mikrosekunden und 1 Mikrosekunde geregelt wird.

3. Verfahren nach Anspruch 1 oder 2, dadurch gekennzeichnet, daß zum Laserwärmebehandeln ein $CO_2$-Laser verwendet wird und mit einem Strahlungspyrometer (11) die Wärmestrahlung mit einer Wellenlänge in einem Bereich zwischen 0,9 bis 1,2 Mikrometer erfaßt wird.

4. Verfahren nach Anspruch 3, dadurch gekennzeichnet, daß die Wärmestrahlung mit einer Wellenlänge von 1,06 µm erfaßt wird.

5. Verfahren nach Anspruch 1, dadurch gekennzeichnet, daß zum Laserwärmebehandeln ein Festkörperlaser, vorzugsweise ein Nd: YAG-laser verwendet wird und mit einem Strahlungspyrometer (11) die Wärmestrahlung mit einer Wellenlänge in einem Bereich zwischen 9 bis 15 Mikrometer erfaßt wird.

6. Verfahren nach Anspruch 5, dadurch gekennzeichnet, daß die Wärmestrahlung mit einer Wellenlänge von 10,6 µm erfaßt wird.

7. Verfahren nach einem der Ansprüche 1 bis 6, gekennzeichnet durch die Einstellung einer relativen Vorschubgeschwindigkeit zwischen dem Laserstrahl und dem Bauteil (14) und/oder einer Leistungsflußdichte des Laserstrahles, wobei mit einer kleineren als der maximalen Laserleistung die vorgegebene Temperatur der Oberfläche des Bauteiles im zeitlichen Mittel erreicht wird.

8. Verfahren nach Anspruch 7, dadurch gekennzeichnet, daß mit 70% der maximalen Laserleistung im zeitlichen Mittel gearbeitet wird.

9. Verfahren nach einem der Ansprüche 1 bis 8, dadurch gekennzeichnet, daß die Erfassung der Wellenlänge bzw. des Wellenlängenbereiches in einem Zeitraum schneller als eine Mikrosekunde erfolgt und aus den so erfaßten Werten der Wärmestrahlung ein Mittelwert gebildet wird.

10. Verfahren nach einem der Ansprüche 1 bis 9, dadurch gekennzeichnet, daß mit Hilfe eines Schmalbandfilters nur die Wellenlänge des $CO_2$-Laserlichts von 10.6 µm mit einem zweiten Pyrometer gemessen wird und aus der gemessenen Intensität dieser reflektierten Strahlung der Emissionsfaktor bestimmt wird.

11. Verfahren nach Anspruch 10, dadurch gekennzeichnet, daß bei Kenntnis des Emissionsfaktors für 10,6 µm Wellenlänge der Emissionsfaktor für 1,06 µm Wellenlänge in einem Rechner berechnet wird und mit Hilfe des Emissionsfaktors durch die Messung der 1,06 µm Wellenlänge eine absolute Temperaturmessung vorgenommen wird.

12. Verfahren nach einem der Ansprüche 1 bis 11, dadurch gekennzeichnet, daß bei der Laserwärmebehandlung mit Hilfe des Festkörperlasers die Wärmestrahlung bei einer Wellenlänge von 10,6 µm und die reflektierte Strahlung des Laserlichtes bei einer Wellenlänge von 1,06 µm gemessen wird.

13. Verfahren nach einem der Ansprüche 1 bis 12, dadurch gekennzeichnet, daß zum Erreichen einer großen Einhärtetiefe von über 3 mm die Vorschubgeschwindigkeit unter 0,2 m/min abgesenkt wird.

14. Verfahren nach Anspruch 13, gekennzeichnet durch eine Einhärtetiefe von 4 mm.

15. Vorrichtung zur Durchführung des Verfahrens nach einem der Ansprüche 1 bis 14 mit einem einen Laserstrahl (18) aussendenden Laser (10) sowie einem im Strahlengang angeordneten optischen System und einem Leistungsteil (15), dadurch gekennzeichnet, daß dem Leistungsteil (15) eine Regeleinrichtung zum Regeln der Oberflächentemperatur zugeordnet ist, wobei die Regeleinrichtung einen mit einem Meßkreis verbundenen Strahlungspyrometer (11) aufweist, der Veränderungen in der Oberflächentemperatur erfaßt, welche mit einem am Sollwertgeber (17) eingestellten Sollwert verglichen und die so ermittelten Abweichungen in der Oberflächentemperatur dem Regler eingespeist werden, der in Abhängigkeit davon Stellsignale an ein die Leistung des Lasers regelndes Stellglied abgibt.

16. Vorrichtung nach Anspruch 15, dadurch gekennzeichnet, daß das optische System mindestens einen für die Wellenlänge bzw. den Wellenlängenbereich der Wärmestrahlung durchlässigen und die Wellenlänge des Laserstrahles reflektierenden Umlenkspiegel (20) aufweist und der Strahlungspyrometer (11) außerhalb des Strahlenganges des Laserstrahles (18) im Strahlengang der durch den Umlenkspiegel tretenden Wärmestrahlung angeordnet ist.

**Revendications**

1. Procédé de traitement thermique ou de traitement de durcissement d'une pièce à l'état solide à l'aide d'un faisceau laser, selon lequel à l'aide d'au moins un détecteur de rayonnement qui ne détecte de manière isolée que le rayonnement thermique d'une certaine longueur d'onde ou d'une certaine plage de longueurs d'onde, on détermine la température de surface le long de la zone de traitement de la pièce et on maintient constante la température dans une plage au maximum égale à ± 100 K de part et d'autre de la température de consigne, par une régulation en ligne de la puissance du laser dans un intervalle de temps inférieur à une milliseconde.

2. Procédé selon la revendication 1, caractérisé en ce que dans le cas du durcissement par laser, de la cristallisation par laser ou du recuit de coalescence par laser, on règle la puissance du laser dans un intervalle de temps compris entre 10 microsecondes et une microseconde.

3. Procédé selon la revendication 1 ou 2, caractérisé en ce que pour le traitement thermique par laser, on utilise un laser au gaz $CO_2$ et par un pyromètre de rayonnement (11), on détecte le rayonnement thermique avec une longueur d'onde contenue dans une plage comprise entre 0,9 à 1,2 micromètre.

4. Procédé selon la revendication 3, caractérisé en ce qu'on détecte le rayonnement thermique d'une longueur d'onde de 1,06 µm.

5. Procédé selon la revendication 1, caractérisé en ce que pour le traitement thermique, on utilise un laser à solide, de préférence un laser Nd: YAG et à l'aide d'un pyromètre à rayonnement (11), on détecte le rayonnement thermique d'une longueur d'onde située dans une plage comprise entre 9 et 15 micromètres.

6. Procédé selon la revendication 5, caractérisé en ce qu'on détecte le rayonnement thermique ayant une longueur d'onde de 10,6 µm.

7. Procédé selon l'une des revendications 1 à 6, caractérisé par un réglage d'une vitesse d'avancée relative entre le faisceau laser et la pièce (14) et/ou une densité de flux de puissance du faisceau laser de manière à obtenir la température prédéterminée à la surface de la pièce dans la moyenne du temps avec un puissance inférieure à la puissance maximale.

8. Procédé selon la revendication 7, caractérisé en ce qu'en moyenne dans le temps, on travaille à une puissance égale à 70% de la puissance maximale du laser.

9. Procédé selon l'une des revendications 1 à 8, caractérisé en ce que la détection de la longueur d'onde ou de la plage des longueurs d'onde se fait dans un intervalle de temps inférieur à une microseconde et à partir des grandeurs ainsi détectées du rayonnement thermique, on forme une valeur moyenne.

10. Procédé selon l'une des revendications 1 à 9, caractérisé en ce qu'à l'aide d'un filtre à bande étroite, on mesure seulement la longueur d'onde de la lumière du laser à gaz $CO_2$ égale à 10,6 micromètres avec un second pyromètre et à partir de l'intensité mesurée de ce rayonnement réfléchi, on détermine le coefficient d'émission.

11. Procédé selon la revendication 10, caractérisé en ce que connaissant le coefficient d'émission pour une longueur d'onde de 10,6 micromètres, on détermine le coefficient d'émission pour une longueur d'onde de 1,06 micromètre à l'aide d'un calculateur et utilisant ce coefficient d'émission, on effectue une mesure de la température absolue en mesurant la longueur d'onde de 1,06 micromètre.

12. Procédé selon l'une des revendications 1 à 11, caractérisé en ce que pour un traitement thermique par laser à l'aide d'un laser à corps solide, on mesure le rayonnement thermique pour une longueur d'onde de 10,6 micromètres et le rayonnement réfléchi du faisceau laser pour une longueur d'onde de 1,06 micromètre.

13. Procédé selon l'une des revendications 1 à 12, caractérisé en ce que pour atteindre une grande profondeur de traitement, supérieure à 3 mm, on abaisse la vitesse d'avancée en-desous de 0,2 m/min.

14. Procédé selon la revendication 13, caractérisé par une profondeur de traitement de 4 mm.

15. Dispositif pour la mise en œuvre du procédé selon l'une des revendications 1 à 14 avec un faisceau (18) émis par un laser (10) ainsi que par un système optique placé dans le chemin du faisceau lumineux et un circuit de puissance (15), caractérisé en ce que le circuit de puissance (15) est associé à une installation de régulation pour réguler la température de surface et l'installation de régulation comporte un pyromètre à rayonnement (11) relié à un circuit de mesure qui détecte les variations de la température de surface, ces variations étant comparées à une grandeur de consigne réglée sur un capteur de grandeur de consigne (7), et les variations ainsi déterminées pour la température de surface sont fournies à l'installation de régulation qui émet des signaux de réglage pour un organe de réglage assurant la régulation de la puissance du laser.

16. Dispositif selon la revendication 15, caractérisé en ce que le système optique comporte au moins un miroir de renvoi (20) transparent pour la longueur d'onde ou la plage des longueurs d'onde du rayonnement thermique et réfléchissant la longueur d'onde du faisceau laser, et le pyromètre à rayonnement (11) est prévu à l'extérieur du chemin suivi par le faisceau laser (18) en étant situé dans le chemin du rayonnement thermique traversant le miroir de renvoi.

**Claims**

1. Process for thermal working or heat treatment of a component in the solid state by a laser beam, with the surface temperature along a working region of the component being determined and kept constant within at most 100 K around the desired temperature by means of at least one radiation detector, which detects only the heat radiation of a defined wavelength or of a defined wavelength range in isolation, by on-line control of the laser power within a time span shorter than 1 millisecond.

2. Process according to Claim 1, characterized in that, in laser hardening, laser recrystallizing or laser soft-annealing, the laser power is controlled within a time span between 10 microseconds and 1 microsecond.

3. Process according to Claim 1 or 2, characterized in that, for the laser heat treatment, a $CO_2$ laser is used and the heat radiation of a wavelength in a range between 0.9 and 1.2 micrometers is detected by a radiation pyrometer (11).

4. Process according to Claim 3, characterized in that the heat radiation of a wavelength of 1.06 μm is detected.

5. Process according to Claim 1, characterized in that, for the laser heat treatment, a solid-state laser, preferably an Nd:YAG laser, is used and the heat radiation of a wavelength in a range between 9 and 15 micrometers is detected by a radiation pyrometer (11).

6. Process according to Claim 5, characterized in that the heat radiation of a wavelength of 10.6 μm is detected.

7. Process according to one of Claims 1 to 6, characterized by setting a relative advancing speed between the laser beam and the component (14) and/or a power flux density of the laser beam, the preset temperature of the surface of the component being reached on time average with a smaller laser power than the maximum power.

8. Process according to Claim 7, characterized in that 70% of the maximum laser power are used on time average.

9. Process according to one of Claims 1 to 8, characterized in that the detection of the wavelength or of the wavelength range takes place in a time span shorter thanone microsecond and an average is formed from the heat radiation values thus detected.

10. Process according to one of Claims 1 to 9, characterized in that, by means of a narrow-band filter, only the wavelength of the $CO_2$ laser light of 10.6 μm is measured by a second pyrometer and the emission factor is determined from the measured intensity of this reflected radiation.

11. Process according to Claim 10, characterized in that, if the emission factor for 10.6 μm wavelength is known, the emission factor for 1.06 μm wavelength is calculated in a computer and an absolute temperature measurement is carried out with the aid of the emission factor by the measurement at 1.06 μm wavelength.

12. Process according to one of Claims 1 to 11, characterized in that, in laser heat treatment by means of the solid-state laser, the heat radiation at a wavelength of 10.6 μm and the reflected radiation of the laser light at a wavelength of 1.06 μm are measured.

13. Process according to one of Claims 1 to 12, characterized in that the advancing speed is reduced to less than 0.2 m/minute in order to reach a great hardening depth of more than 3 mm.

14. Process according to Claim 13, characterized by a hardening depth of 4 mm.

15. Equipment for carrying out the process according to one of Claims 1 to 14, having a laser (10) emitting a laser beam (18), an optical system arranged in the path of the beam and a power unit (15), characterized in that a control system for controlling the surface temperature is associated with the power unit (15), the control system having a radiation pyrometer (11) connected to a measuring circuit which detects changes in the surface temperature which is compared with a desired value set on a set-value generator (17), and the deviations thus determined in the surface temperature are fed to the controller which, as a function thereof, emits control signals to a control member which controls the power of the laser.

16. Equipment according to Claim 15, characterized in that the optical system contains at least one deflection mirror (20) which is transparent to the wavelength or the wavelength range of the heat radiation and reflects the wavelength of the laser beam, and the radiation pyrometer (11) is arranged outside the path of the laser beam (18) in the path of the heat radiation passing through the deflection mirrc..

**Fig. 1** : Oberflächentemperatur als Funktion der Zeit bei gleichen eingestellten Prozessparametern.

**Fig. 2 :** Schematische Darstellung der Vorrichtung

**Fig. 3 :** a) Beispiel für einen Temperaturverlauf als Funktion der
Zeit bei on-line Prozesskontrolle und Leistungsregelung
b) zugehöriger Verlauf der Laserleistung.

Fig. 4 : a) Änderung der Oberfächentemperatur als Funktion der angezeigten Leistung

b) absorbierte Leistung als Funktion der angezeigten und gemessenen Ausgangsleistung

**Fig. 5 :** Beispiel für die Integration der on-line
Prozesskontrolle in das Optische System des Lasers

**Fig. 6 :** Beispiel für die Integration der on-line
Prozesskontrolle in das Optische System des Lasers